# EUROPEAN PATENT SPECIFICATION

(11) **EP 1 435 614 B1**
(45) Date of publication and mention of the grant of the patent: **08.04.2009**
(21) Application number: 03258186.0
(22) Date of filing: 23.12.2003
(51) Int. Cl.: G11B 15/665

(54) **Tape-deck with resiliently deformable pole base loading arms**
Bandlaufwerk mit elastisch verformbaren Ladearmen
Appareil à bande avec bras de chargement élastiquement déformables

(30) Priority: 30.12.2002 KR 2002086840
(43) Date of publication of application: 07.07.2004
(73) Proprietor: SAMSUNG ELECTRONICS CO., LTD., Suwon-si, Gyeonggi-Do 442-742 (KR)
(72) Inventor: Kim, Bong-joo, Suwon Gyeonggi-do (KR); Kim, Jun-young, Yeongtong-gu, Suwon Gyeonggi-do (KR); Seo, Jae-kab, Paldal-gu, Suwon-si Gyeonggi-do (KR)
(74) Representative: Grey, Ian Michael

(56) References cited:
- EP-A- 1 400 965
- DE-A1- 3 025 465
- US-A- 5 597 130

## Description

The present invention relates to a tape deck comprising first and second pole bases for wrapping a tape around a head drum and first and second pole base driving gears having respective arms coupled to respective ones of the pole bases by links for moving the pole bases between tape unloaded and tape fully loaded positions, said arms being elastically deformable such that said gears can rotate beyond the point where the pole bases reach their tape fully loaded positions.

Generally, tape recorders such as video tape recorders (VTR), camcorders, and the like, have deck mechanisms for recording data on and reproducing data from a magnetic tape as it runs along a predetermined path defined inside the deck.

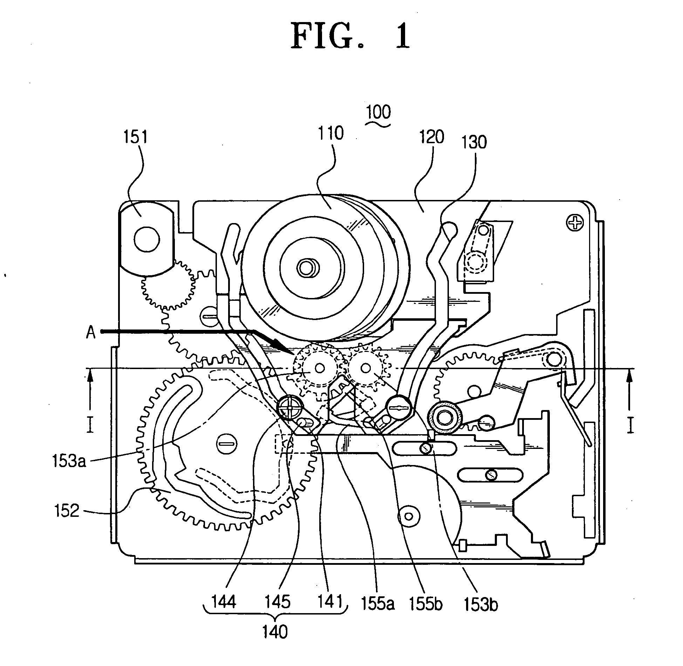

Figure 1 illustrates one example of a moving deck 100, which is typically employed in a tape recorder. The deck 100 of the tape recorder includes a first and second pole base assemblies 140 and a driving device for moving the pole base assemblies 140 along a guide slots 130 in the deck 100 during the loading and unloading of a magnetic tape.

Each of the pole base assemblies 140 includes a base member 141 slidably located in respective guide slots 130, a pole member 145 protruding from an upper surface of the base member 141 and/or a roller member 144. While the guide slot 130 is depicted as being formed integrally with the head drum base 120, on which the head drum 110 is seated, many variations of this structure are known.

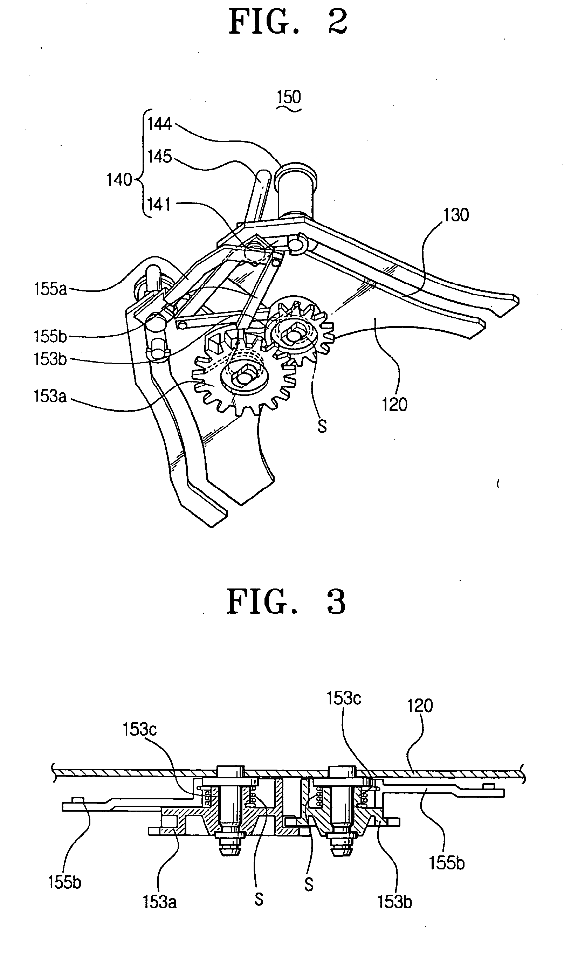

Referring to Figure 2, the pole base assembly driving device 150 includes first and second loading gears 153a, 153b and first and second link members 155a, 155b.

The first and the second loading gears 153a, 153b are disposed on the deck 100 and are driven by a loading motor 151 (Figure 1) via a gear train including a main gear 152 (Figure 1).

The first link member 155a is pivotably connected at one end to the base member 141 of the first pole base assembly 140. The other end of the first link member 155a is connected to one end of the second link member 155b. The other end of the second link member 155b is connected to the first loading gears 153a. The second loading gear 153b is connected in a similar way by links to the base member of the second pole base assembly. As a result, the pole base assemblies 140 are moved along the guide slots 130 by rotation of the loading gears 153a, 153b.

The pole base assemblies 140 should be in close contact with the terminal ends of the guide slots 130, i.e. the head drum ends, and should also maintain close contact stably, in order to ensure stable data recording and reproducing with respect to the magnetic tape (not shown).

To this end, the loading motor 151 is conventionally driven for an extra time after the pole base assemblies 140 have contacted the ends of the guide slots 130.

However, this causes excessive pressure on the link members 155a, 155b when the loading gears 153a, 153b are driven past the point at which the pole base assemblies 140 have contacted the ends of the guide slots 130. Also, as the loading and unloading of the magnetic tape is repeated, such over pressure is repeatedly exerted on the link members 155a, 155b, causing the link members 155a, 155b to break and degrading the durability of the deck 100.

In order to solve the above-mentioned problem, it has been proposed that torsion springs (S) be added inside the loading gears 153a, 153b, as shown in Figure 3. The torsion springs (S) are disposed coaxially around the axes 153c of the loading gears 153a, 153b. The torsion springs have one end fixed to inner sidewalls of the loading gears 153a, 153b and the other end fixed to the second link members 155b which are connected to the loading gears 153a, 153b.

With this structure, as the loading gears 153a, 153b are rotated past the point at which the pole base assemblies 140 come into contact with the ends of the guide slots 130, the loading gears 153a, 153b can rotate with respect to the second link members 155b within a movement range permitted by the torsion springs (S). Accordingly, the pole base assemblies 140 are in close contact with the ends of the guide slots 130 and are held in close contact by the recovery force of the torsion springs (S).

The presence of the torsion springs (S) makes the loading gears undesirably bulky, complex and difficult to assemble.

Prior art tape deck assemblies are known from DE 20 35 465, EP 1 400 965 and US 5,597,130, the latter document disclosing a tape deck assembly having loading gears connected to pole base assemblies by elastically deformable arms.

A tape deck, according to the present invention, is characterised in that the arm of the first pole base driving gear has notches that can close during deformation when the first pole base loading gear rotates beyond the point where the first pole base reaches its tape fully loaded position.

Preferably, the arm of the first pole base driving gear includes a spring means extending across said notches.

Preferably, the arm of the second pole base driving gear has notches that can close during deformation when the second pole base loading gear rotates beyond the point where the second pole base reaches its tape fully loaded position. More preferably, the arm of the second pole base driving gear includes a spring means extending across the notches in the arm of the second pole base driving gear.

Preferably, the notches are formed on the side of the arm which is concave when the arm is bent by the rotation of the pole base driving gear.

Preferably, the arm is formed integrally with the pole base driving gear.

Preferably, the arm is made by molding a synthetic resin material together with the pole base driving gear.

An embodiment of the present invention will now be described, by way of example, with reference to the accompanying drawings, in which:
Figure 1 is a plan view illustrating a conventional tape recorder deck;
Figure 2 is a bottom perspective view illustrating in detail the portion indicated by arrow 'A' in Figure 1;
Figure 3 is a sectional view taken on line I-I in Figure 1;
Figure 4 is a bottom perspective view illustrating a pole base assembly driving device according to the present invention;
Figure 5 is a perspective view of a loading gear/link element of the pole base assembly driving device in Figure 4; and
Figures 6 and 7 are views illustrating the operation of the pole base assembly driving device in Figure 4.

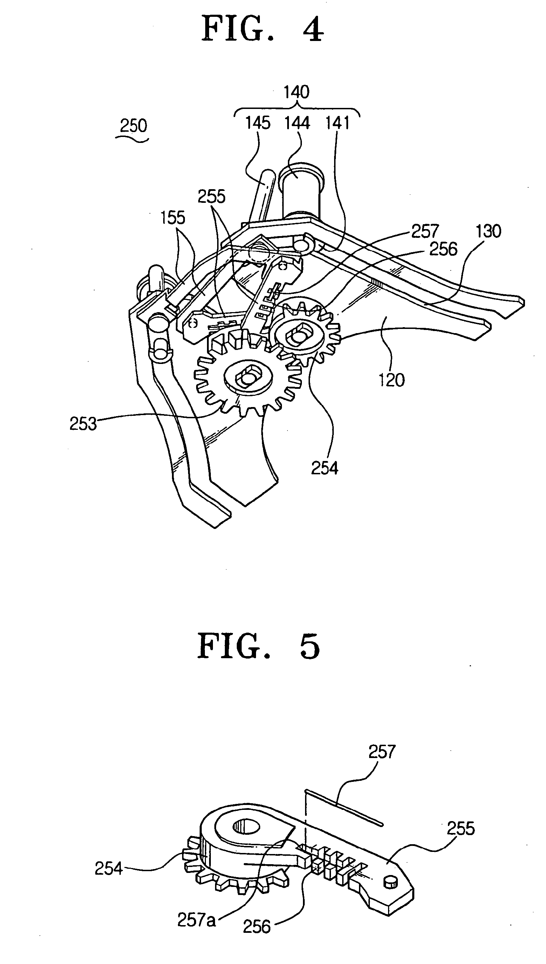

Referring to Figure 4, a pole base assembly driving device 250 for a tape recorder according to the present invention includes a pole base assembly 140, first and second loading gears 253, 254, two elastic rods 255 and two link members 155.

More specifically, a pair of pole base assemblies 140 are slidably provided in a pair of guide slots 130, which are formed adjacent to a head drum 110, on its left and right as in the know device shown in Figure 1. Each pole base assembly 140 includes a base member 141 which is slidably disposed in a guide slot 130. At least one pole member 145 and/or a roller member 144 are formed on the upper surface of each base member 141. The link members 155 are hinged to the lower surfaces of respective base members 141. The guide slots 130 are preferably integrally formed in a head drum base 120, as in know device in Figure 1, on which the head drum 110 is seated. It should be understood that the construction of the guide slot 130 is not limited to that in this embodiment but rather can be modified appropriately in accordance with the type of the deck 100 employed.

The first and second loading gears 253, 254 are rotatably disposed on the head drum base 120, drive respective pole base assemblies 140 and are rotated by the the loading motor 151 (Figure 1) via a gear train including the main gear 152 (Figure 1). According to an embodiment of the present invention, the first loading gear 153 is engaged with the main gear 152, and is driven by the force transmitted from the loading motor 151 via the main gear 152. Also, the second loading gear 254 is engaged with the first loading gear 153, and is driven by the force transmitted from the main gear 152 via the first loading gear 253. To this end, the first loading gear 253 has a dual-gear structure consisting of a first toothed part engaged with teeth on main gear 152 and another toothed part engaged with teeth on the second loading gear 254. Again, the structure of the first loading gear 253 is modifiable depending on the type of the deck 100 employed. Generally, the loading gears 253, 254 may be formed from metal and it is preferable to form the loading gears 253, 254 from a material which is inexpensive and allows easy shaping. For example, the loading gears 253, 254 may be formed by a molding with a synthetic resin material. The loading gears 253, 254 are connected to the pole base assemblies 140 through at least one link member and, in the present embodiment, the loading gears 253, 254 are connected to the pole base assemblies 140 through the link member 155 and the elastic rod 255.

Referring to Figure 5, the second elastic rod 255 is formed integrally with the second loading gear 254. Accordingly, as the elastic rod 255 protrudes from the side of the second loading gear 254, one end of the elastic rod 255 is fixed to the second loading gear 254, while the other end is hinged to the second link member 155 (Figure 4), substituting for the conventional second link member 155b (Figure 2). The second elastic rod 255 pivotally connects the second loading gear 254 with the second link member 155. It is preferable that the second elastic rod 255 be made of a material which is elastically bendable by an external force. Accordingly, the second elastic rod 255 is bent by the pressure which is generated when the second loading gear 254 is driven in the magnetic tape loading direction after the pole base assemblies 140 have contacted the ends of the guide slots 130 toward the head drum 110. The second elastic rod 255 is preferably made by molding a synthetic resin material together with the second loading gear 254.

The technical structure of the first loading gear 253 and the first elastic rod 255 is similar to that of the second loading gear 254 and the second elastic rod 255 as described above with reference to Figure 5. Accordingly, the description thereof will be omitted.

Deformation restricting means prevents inelastic deformation of the elastic rods 255. In the present embodiment, the elastic rod 255 is deformed by the loading gears 253, 254 only to a predetermined shape. To this end, the deformation restricting means includes a plurality notches separated by protrusions 256, formed on the elastic rod 255.

The notches are arrayed in a line lengthwise in a middle portion of one side of each elastic rod 255. The notches are formed in the side of the elastic rod 255 which is concave when the elastic rod 255 deforms during pole base loading. The protrusions 256 between the notches take the form of ribs on the elastic rod 255.

The notches are formed such that they close up and the tips of the protrusions 256 come into contact with the tips of the neighbouring protrusions 256 when the elastic rod 255 is deformed by the rotation of the loading gears 253, 254. Because the tips of the protrusions 256 contact their neighbours, further undesired deformation of the elastic rod 255 is prevented.

Steel wires 257 function as elastic reinforcement members for the elastic rods 255 so as to help the elastic rods 255 return to their original shapes during the unloading of a magnetic tape. The steel wires 257 are seated in seating grooves 257a. The seating grooves 257a are partly on one side and partly on the other side of each elastic rod 255 and cross the protrusions 256.

The operation of a pole base assembly driving device 250 according to the present invention will now be described in greater detail.

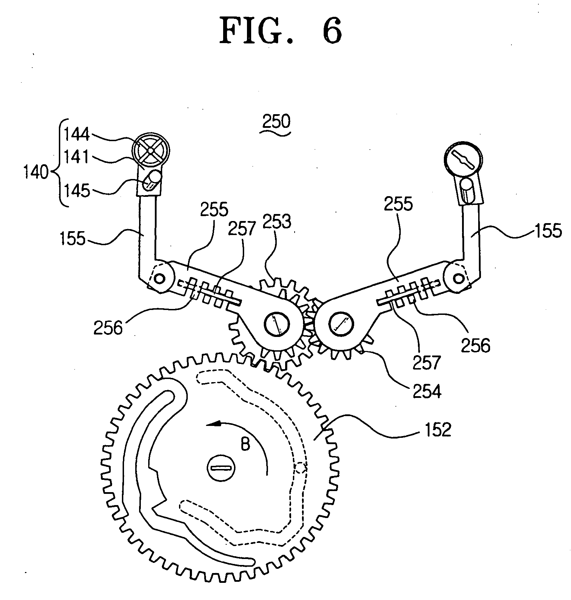

As shown in Figure 6, during loading of a magnetic tape, the main gear 152 is rotated in direction 'B' by the loading motor 151 (Figure 1). Accordingly, the first loading gear 253 is rotated. The second loading gear 254 is rotated by the first loading gear 253. Accordingly, the pole base assemblies 140, which are connected to the first and the second loading gears 253, 254 via the elastic rods 255 and the link members 155, are moved to the head drum ends of the guide slots 130 (Figure 4).

When the pole base assemblies 140 contact the ends of the guide slots 130, the pole base assemblies 140 are prevented from moving further. However, the main gear 152 continues to rotate to press the pole base assemblies 140 tightly against the ends of the guide slots 130. As a result, the first and second loading gears 253, 254 are further driven.

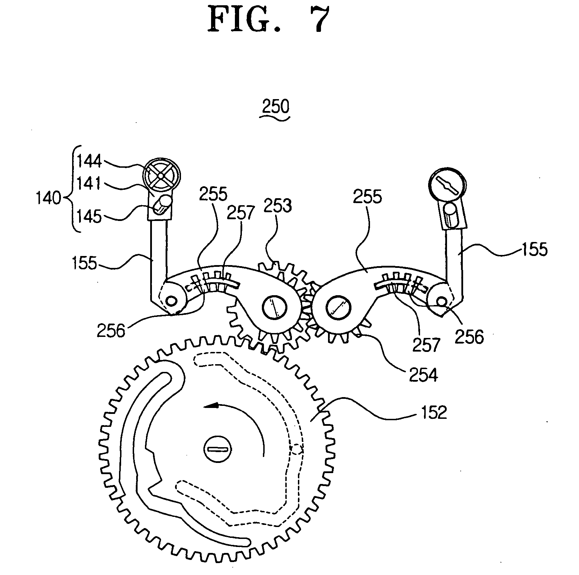

As the first and second loading gears 253, 254 are rotated, pressure is exerted inside the elastic rods 255. Accordingly, as shown in Figure 7, the elastic rods 255 are elastically bent to press the pole base assemblies 140 tightly against the ends of the guide slots 130, while also elastically supporting the pole base assemblies 140. The elastic rods 255 are bent by the rotation of the loading gears 253, 254. As the rotation of the loading gears 253, 254 exceeds a predetermined range, the tips of protrusions 256 on the elastic rods 255 contact their neighbours, thereby preventing further bending of the elastic rod 255. As a result, inelastic deformation of the elastic rod 255 due to excessive bending is avoided.

During the unloading of the magnetic tape, the loading gears 253, 254 are rotated in the reverse direction (Figure 6). Accordingly, the elastic rod 255 is subject to a recovery force and returns to its original shape. At this time, as the recovery force of the steel wire 257 adds to the recovery force of the elastic rod 255 and the elastic rod 255 returns to its original shape more quickly.

While the present invention has been described as above with reference to a particular embodiment, this example should not be considered limiting. That is, the present invention can also be applied to other types of tape recorders such as a video tape recorder (VTR) and the like which has a loading gear rotating in the loading of magnetic tape by an extra rotation angle after the pole base assemblies are contacted at the ends of the guide slots, and a link member pivotally connecting the loading gear with the pole base assemblies.

According to the present invention as described above, instead of a conventional second link member and torsion springs, an elastic rod, which is integrally formed with a loading gear and elastically deformable by an external force, is used. As a result, time for assembling the deck is reduced, and the assembly process becomes simpler.

Further, the pressure exerted on the elastic rod due to excessive rotation of the main gear can be absorbed by the elastic bending of the elastic rod, and also the inelastic deformation of the elastic rod can be prevented due to the presence of protrusions on the side of the elastic rod and the steel wire. As a result, the durability of components is prolonged, and the product reliability is ensured even for frequent loading and unloading of the magnetic tape.

## Claims

1. A tape deck comprising:
first and second pole bases (141) for wrapping a tape around a head drum; and
first and second pole base driving gears (253, 254) having respective arms (255) coupled to respective ones of the pole bases (141) by links (155) for moving the pole bases (141) between tape unloaded and tape fully loaded positions, said arms (255) being elastically deformable such that said gears (253, 254) can rotate beyond the point where the pole bases (141) reach their tape fully loaded positions, **characterised in that** the arm (255) of the first pole base driving gear (253) has notches that close during deformation when the first pole base loading gear (253) rotates beyond the point where the first pole base (141) reaches its tape fully loaded position.

2. A tape deck according to claim 1, wherein the arm (255) of the first pole base driving gear includes a spring means (257) extending across said notches.

3. A tape deck according to claim 1 or 2, wherein the arm (255) of the second pole base driving gear (254) has notches that can close during deformation when the second pole base loading gear (254) rotates beyond the point where the second pole base (141) reaches its tape fully loaded position.

4. A tape deck according to claim 3, wherein the arm (255) of the second pole base driving gear includes a spring means (257) extending across the notches in the arm (255) of the second pole base driving gear (254).

5. The tape deck according to any preceding claim wherein the notches are formed on the side of the arm (255) which is concave when the arm (255) is bent by the rotation of the pole base driving gear (253,254).

6. The tape deck according to any preceding claim wherein the arm (255) is formed integrally with the pole base driving gear (253, 254).

7. The tape deck according to any preceding claim wherein the arm (255) is made by molding a synthetic resin material together with the pole base driving gear (253,254).

## Patentansprüche

1. Kassettenlaufwerk, umfassend:
einen ersten und einen zweiten Fädelschlitten (141) zum Fädeln eines Bands um eine Kopftrommel und
erste und zweite Fädelschlittenantriebszahnräder (253, 254) mit jeweiligen Armen (255), die durch Verbindungen (155) mit jeweiligen der Fädelschlitten (141) gekoppelt sind, um die Fädelschlitten (141) zwischen einer Bandentladen- und einer Band-vollständig-geladen-Position zu bewegen, wobei die genannten Arme (255) elastisch verformbar sind, so dass die genannten Zahnräder (253, 254) sich über den Punkt hinaus drehen können, an dem die Fädelschlitten (141) ihre Band-vollständig-geladen-Positionen erreichen, **dadurch gekennzeichnet, dass** der Arm (255) des ersten Fädelschlittenantriebszahnrads (253) Kerben hat, die sich während der Verformung schließen, wenn sich das erste Fädelschlittenantriebszahnrad (253) über den Punkt hinaus dreht, an dem der erste Fädelschlitten (141) seine Band-vollständig-geladen-Position erreicht.

2. Kassettenlaufwerk nach Anspruch 1, bei dem der Arm (255) des ersten Fädelschlittenantriebszahnrads ein Federmittel (257) aufweist, das sich über die genannten Kerben erstreckt.

3. Kassettenlaufwerk nach Anspruch 1 oder 2, bei dem der Arm (255) des zweiten Fädelschlittenantriebszahnrads (254) Kerben hat, die sich während der Verformung schließen können, wenn sich das zweite Fädelschlittenantriebszahnrad (254) über den Punkt hinaus dreht, an dem der zweite Fädelschlitten (141) seine Band-vollständig-geladen-Position erreicht.

4. Kassettenlaufwerk nach Anspruch 3, bei dem der Arm (255) des zweiten Fädelschlittenantriebszahnrads ein Federmittel (257) aufweist, das sich über die Kerben in dem Arm (255) des zweiten Fädelschlittenantriebszahnrads (254) erstreckt.

5. Kassettenlaufwerk nach einem der vorhergehenden Ansprüche, bei dem die Kerben an der Seite des Arms (255) ausgebildet sind, die konkav ist, wenn der Arm (255) durch die Drehung des Fädelschlittenantriebszahnrads (253, 254) gebogen wird.

6. Kassettenlaufwerk nach einem der vorhergehenden Ansprüche, bei dem der Arm (255) einstückig mit dem Fädelschlittenantriebszahnrad (253, 254) ausgebildet ist.

7. Kassettenlaufwerk nach einem der vorhergehenden Ansprüche, bei dem der Arm (255) durch Formen eines Kunstharzmaterials zusammen mit dem Fädelschlittenantriebszahnrad (253, 254) hergestellt wurde.

## Revendications

1. Platine d'enregistrement sur bande comprenant :
des premier et deuxième guides de transfert (141) pour enrouler une bande autour d'un tambour porte-têtes ; et
des premier et deuxième pignons d'entraînement de guides de transfert (253, 254) ayant des bras respectifs (255) couplés aux guides de transfert respectifs (141) par des biellettes (155) pour déplacer les guides de transfert (141) entre des positions de déchargement de bande et de chargement complet de la bande, lesdits bras (255) étant déformables de manière élastique de telle sorte que lesdits pignons (253, 254) puissent tourner au-delà du point où les guides de transfert (141) atteignent leur position de chargement complet de la bande, **caractérisée en ce que** le bras (255) du pignon d'entraînement du premier guide de transfert (253) a des encoches qui se ferment pendant la déformation lorsque le pignon de chargement de premier guide de transfert (253) tourne au-delà du point où le premier guide de transfert (141) atteint sa position de chargement complet de la bande.

2. Platine d'enregistrement sur bande selon la revendication 1, dans laquelle le bras (255) du pignon d'entraînement de premier guide de transfert comprend un moyen de ressort (257) qui s'étend en travers desdites encoches.

3. Platine d'enregistrement sur bande selon la revendication 1 ou 2, dans laquelle le bras (255) du pignon d'entraînement de deuxième guide de transfert (254) a des encoches qui peuvent se fermer pendant la déformation lorsque le pignon de chargement du deuxième guide de transfert (254) tourne au-delà du point où le deuxième guide de transfert (141) atteint sa position de chargement complet de la bande.

4. Platine d'enregistrement sur bande selon la revendication 3, dans laquelle le bras (255) du pignon d'entraînement de deuxième guide de transfert comprend un moyen de ressort (257) qui s'étend en travers des encoches du bras (255) du pignon d'entraînement de deuxième guide de transfert (254).

5. Platine d'enregistrement sur bande selon l'une quelconque des revendications précédentes, dans laquelle les encoches sont formées sur le côté du bras (255) qui est concave lorsque le bras (255) est courbé par la rotation du pignon d'entraînement du guide de transfert (253, 254).

6. Platine d'enregistrement sur bande selon l'une quelconque des revendications précédentes, dans laquelle le bras (255) fait partie intégrante du pignon d'entraînement de guide de transfert (253, 254).

7. Platine d'enregistrement selon l'une quelconque des revendications précédentes, dans laquelle le bras (255) est réalisé par moulage d'une résine synthétique avec le pignon d'entraînement du guide de transfert (253, 254).
